# EUROPÄISCHE PATENTSCHRIFT

(11) **EP 2 368 743 B1**
(45) Veröffentlichungstag und Bekanntmachung des Hinweises auf die Patenterteilung: **26.03.2014**
(21) Anmeldenummer: 11154267.6
(22) Anmeldetag: 14.02.2011
(51) Int. Cl.: B60W 10/30, B60K 17/28, B60W 30/188

(54) **Verfahren zum Betreiben eines Antriebsstrangs**
Method for operating a drive train
Procédé pour faire fonctionner une chaîne cinématique

(30) Priorität: 10.03.2010 DE 102010002724
(43) Veröffentlichungstag der Anmeldung: 28.09.2011
(73) Patentinhaber: ZF Friedrichshafen AG, 88038 Friedrichshafen (DE)
(72) Erfinder: Schneider, Florian, 88161, Lindenberg (DE); Mair, Roland, 88069, Tettnang (DE)

(56) Entgegenhaltungen:
- EP-A1- 2 149 471
- WO-A1-2004/041576
- DE-A1- 19 708 929
- US-A1- 2008 188 349

## Beschreibung

Die Erfindung betrifft ein Verfahren zum Betreiben eines Antriebsstrangs, der zumindest ein Antriebsaggregat und ein automatisiertes Schaltgetriebe aufweist.

Als Gruppengetriebe ausgebildete, automatisierte Schaltgetriebe mit einem mehrstufigen Hauptgetriebe und einer dem Hauptgetriebe vor- oder nachgeschalteten Bereichsgruppe sowie mit einer dem Hauptgetriebe vor- oder nachgeschalteten Splitgruppe sind seit längerem bekannt und kommen bevorzugt in Nutzfahrzeugen zur Anwendung. Durch eine beispielsweise zweistufig ausgeführte Splitgruppe mit einem in etwa der Hälfte eines mittleren Übersetzungssprungs zwischen zwei aufeinander folgenden Übersetzungsstufen des Hauptgetriebes entsprechenden Übersetzungssprung werden die Übersetzungssprünge des Hauptgetriebes halbiert und die Anzahl der insgesamt zur Verfügung stehenden Gänge des Gruppengetriebes verdoppelt. Durch eine beispielsweise zweistufige Bereichsgruppe mit einem in etwa um einen mittleren Übersetzungssprung zwischen zwei aufeinander folgenden Übersetzungsstufen des Hauptgetriebes über dem gesamten Übersetzungssprung des Hauptgetriebes liegenden Übersetzungssprung wird die Spreizung des Gruppengetriebes in etwa verdoppelt und die Anzahl der insgesamt zur Verfügung stehenden Gänge nochmals verdoppelt.

Es sind auch automatisierte Schaltgetriebe bekannt, die ausschließlich ein Hauptgetriebe aufweisen. Die Splitgruppe und die Bereichsgruppe sind demnach optionale Baugruppen eines automatisierten Schaltgetriebes, wobei dem Hauptgetriebe eine Bereichsgruppe vor- oder nachgeschaltet und/oder eine Splitgruppe vor- oder nachgeschaltet sein kann. Automatisierte Schaltgetriebe, die formschlüssig arbeitende Schaltelemente aufweisen, sind von automatischen Lastschaltgetrieben mit reibschlüssig arbeitenden Schaltelementen zu unterscheiden.

Weiterhin ist es bereits bekannt, dass ein solcher Antriebsstrang eines Kraftfahrzeugs mit einem automatisierten Schaltgetriebe einen Nebenabtrieb umfassen kann, wobei ein Nebenabtrieb auch als Power Take Off (PTO) bezeichnet wird. Bei Nebenabtrieben wird einerseits zwischen getriebeseitigen und motorseitigen Nebenabtrieben und andererseits zwischen stationären und instationären Nebenabtrieben unterschieden.

Ein motorseitiger Nebenabtrieb zweigt unmittelbar vom Antriebsaggregat ein Moment ab, wohingegen ein getriebeseitiger Nebenabtrieb vom Getriebe ein Moment abzweigt. Stationäre Nebenabtriebe dürfen nur bei stillstehendem Kraftfahrzeug betrieben werden, nämlich dann, wenn das automatisierte Schaltgetriebe eine Neutralstellung einnimmt, also einen Kraftfluss bzw. Momentfluss vom Antriebsaggregat zum Achsantrieb hin unterbrochen ist. Instationäre Nebenabtriebe dürfen hingegen auch dann betrieben werden, wenn im Getriebe ein Gang eingelegt ist, wenn also der Kraftfluss bzw. Momentfluss vom Antriebsaggregat zum Achsantrieb nicht unterbrochen ist.

Ein instationärer, getriebeseitiger Nebenabtrieb eines solchen Antriebsstrangs eines Kraftfahrzeugs mit einem automatisierten Schaltgetriebe kann bislang nur bei stehendem Kraftfahrzeug eingelegt und damit aktiviert werden. Des Weiteren wird bislang dann, wenn ein getriebeseitiger, instationärer Nebenabtrieb eingelegt bzw. aktiviert ist, die Ausführung von Schaltungen verhindert, sodass ein Fahren bei eingelegtem bzw. aktiviertem Nebenabtrieb nur in einem einzigen Gang und damit in einem eingeschränkten Geschwindigkeitsbereich möglich ist. Dabei muss es sich dann zwangsläufig, da nach dem Stand der Technik das Einlegen bzw. Aktivieren eines getriebeseitigen, instationären Nebenabtriebs nur bei stehendem Fahrzeug erlaubt ist, um einen relativ kleinen Gang, nämlich einen Anfahrgang, handeln, da das Anfahren aus dem Stillstand heraus möglich sein muss.

Die hier vorliegende Erfindung betrifft nun ein Verfahren zum Betreiben eines Antriebsstrangs mit einem automatisierten Schaltgetriebe und einem getriebeseitigen, instationärem Nebenabtrieb, bei welchem das Einlegen und damit Aktivieren des getriebeseitigen; instationären Nebenabtriebs auch bei fahrendem Kraftfahrzeug möglich ist.

Aus der DE 197 08 929 A1 ist ein Verfahren zum Betreiben eines Antriebsstrangs mit einem automatisierten oder teilautomatisierten Getriebe und einem Nebenabtrieb bekannt, bei welchem das Einlegen und damit Aktivieren eines Nebenabtriebs nur dann möglich ist, wenn sich das Kraftfahrzeug im Stillstand befindet.

Die gattungsbildende WO 2004/041576 A1 offenbart ein automatisches Ein- und Ausrückverfahren für einen kupplungsabhängigen Antrieb in einem Fahrzeug, wenn sich das Fahrzeug in Bewegung befindet.

Hiervon ausgehend liegt der vorliegenden Erfindung das Problem zu Grunde, ein neuartiges Verfahren zum Betreiben eines Antriebsstrangs eines Kraftfahrzeugs zu schaffen.

Dieses Problem wird durch ein Verfahren gemäß Anspruch 1 gelöst. Zum Aktivieren bzw. Einlegen des getriebeseitigen, instationären Nebenabtriebs während einer Fahrt des Kraftfahrzeugs wird mit folgenden Schritten vorgegangen: a) zunächst wird eine getriebeseitige Anbindungsstelle für den Nebenabtrieb vom Achsantrieb sowie zumindest teilweise vom Antriebsaggregat abgekoppelt; b) darauffolgend werden die Drehzahl der getriebeseitigen Anbindungsstelle für den Nebenabtrieb sowie die Drehzahl des Nebenabtriebs synchronisiert, wobei bei Erreichen einer Synchrondrehzahl zwischen der Drehzahl der Anbindungsstelle für den Nebenabtrieb sowie der Drehzahl des Nebenabtriebs der Nebenabtrieb an die Anbindungsstelle angekoppelt wird; c) anschließend wird die getriebeseitige Anbindungsstelle für den Nebenabtrieb und damit der Nebenabtrieb sowohl an das Antriebsaggregat als auch an den Achsantrieb angekoppelt.

Erfindungsgemäß ist vorgesehen, das obige Verfahren zum Ankoppeln eines getriebeseitigen, instationären Nebenabtriebs PTO an seine jeweilige Anbindungsstelle am Getriebe während der Fahrt des Kraftfahrzeugs nur dann zuzulassen, wenn die Neigung einer Fahrbahn, in welcher das Kraftfahrzeug fährt, kleiner als ein applizierbarer Grenzwert ist. In diesem Fall wird in großen Gefällen bzw. Steigungen, in welchen das Fahrzeug zu stark verzögern kann bzw. zu stark beschleunigen kann, das Einlegen des Nebenabtriebs PTO nicht zugelassen. Hierzu wird dann entweder auf einen messtechnisch erfassten oder rechnerisch ermittelten Neigungswert der Fahrbahn zugegriffen.

Mit der hier vorliegenden Erfindung ist es möglich, einen getriebeseitigen, instationären Nebenabtrieb auch während der Fahrt des Kraftfahrzeugs einzulegen und damit zu aktivieren. Hiermit ist es möglich, einen Nebenabtrieb auch bei relativ hohen Geschwindigkeiten zu betreiben, da es nicht erforderlich ist, den Nebenabtrieb im Stillstand des Kraftfahrzeugs bei einem relativ kleinen Anfahrgang einzulegen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein allgemeines Schema eines Antriebsstrangs, bei welchem das erfindungsgemäße Verfahren einsetzbar ist;
- Fig. 2: einen Sonderfall des Antriebsstrangs der Fig. 1, bei welchem das erfindungsgemäße Verfahren einsetzbar ist;
- Fig. 3: den Antriebsstrang der Fig. 2 in größerem Detail;

- Fig. 4: einen weiteren Antriebsstrang, bei welchem das erfindungsgemäße Verfahren einsetzbar ist; und
- Fig. 5: einen weiteren Antriebsstrang, bei welchem das erfindungsgemäße Verfahren einsetzbar ist.

Die hier vorliegende Erfindung betrifft ein Verfahren zum Betreiben eines Antriebsstrangs mit einem automatisierten Schaltgetriebe und einem getriebeseitigen, instationären Nebenabtrieb.

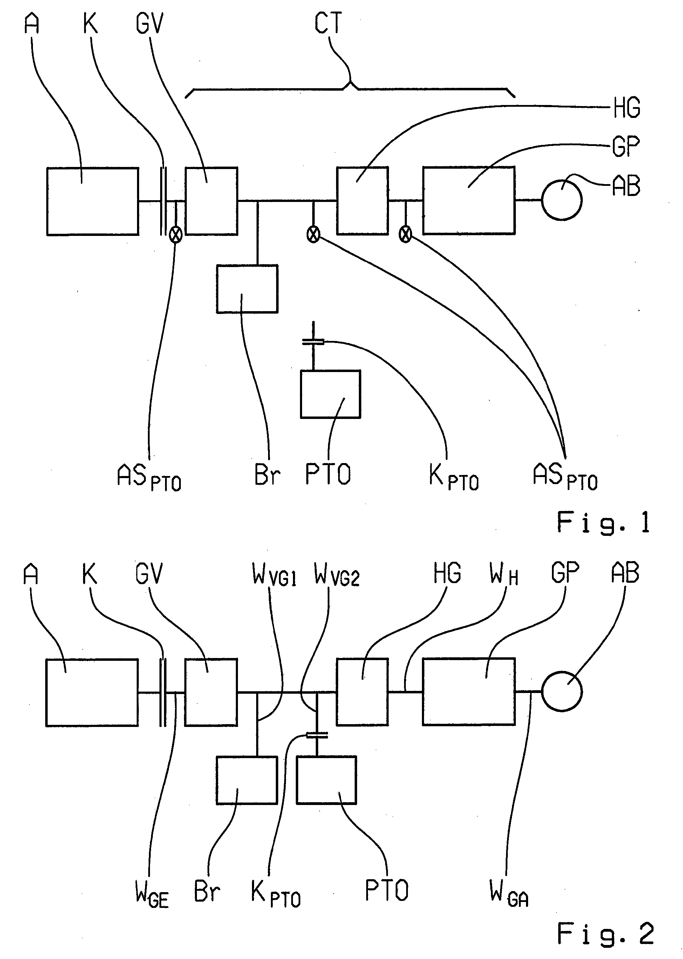

Fig. 1 zeigt stark schematisiert ein Antriebsstrangschema, bei welchem das erfindungsgemäße Verfahren einsetzbar ist, wobei in Fig. 1 ein Antriebsaggregat A und ein Achsantrieb AB mit einem zwischen das Antriebsaggregat A und den Achsantrieb AB geschalteten, als Gruppengetriebe CT ausgebildeten, automatisierten Schaltgetriebe gezeigt sind.

Das in Fig. 1 als Gruppengetriebe CT ausgeführte, automatisierte Schaltgetriebe verfügt gemäß Fig. 1 über ein Hauptgetriebe HG, über eine dem Hauptgetriebe HG antriebstechnisch vorgeschaltete Vorschaltgruppe bzw. Splitgruppe GV und eine dem Hauptgetriebe AG antriebstechnisch nachgeschaltete Nachschaltgruppe bzw. Bereichsgruppe GP. Zwischen das Antriebsaggregat A und das Gruppengetriebe CT ist eine Trennkupplung bzw. Anfahrkupplung K geschaltet, über die das Antriebsaggregat A vom Gruppengetriebe CT abgekoppelt werden kann. Weiterhin zeigt Fig. 1 eine steuerbare Getriebebremse Br sowie einen getriebeseitigen Nebenabtrieb PTO, dem eine Kupplung K_{PTO} zugeordnet ist, wobei der getriebeseitige Nebenabtrieb PTO als instationärer Nebenabtrieb ausgebildet ist und an unterschiedliche Anbindungsstellen AS_{PTO} des Gruppengetriebes CT angekoppelt werden kann. Die Anbindungsstellen AS_{PTO} sind Wellen des Gruppengetriebes CT zugeordnet.

Im Sonderfall der Fig. 2 ist der getriebeseitige, instationäre Nebenabtriebe PTO an eine der in Fig. 1 gezeigten Anbindungsstellen AS_{PTO} für den Nebenabtrieb angekoppelt, nämlich an eine Anbindungsstelle, die antriebstechnisch zwischen der Splitgruppe GV und dem Hauptgetriebe AG liegt.

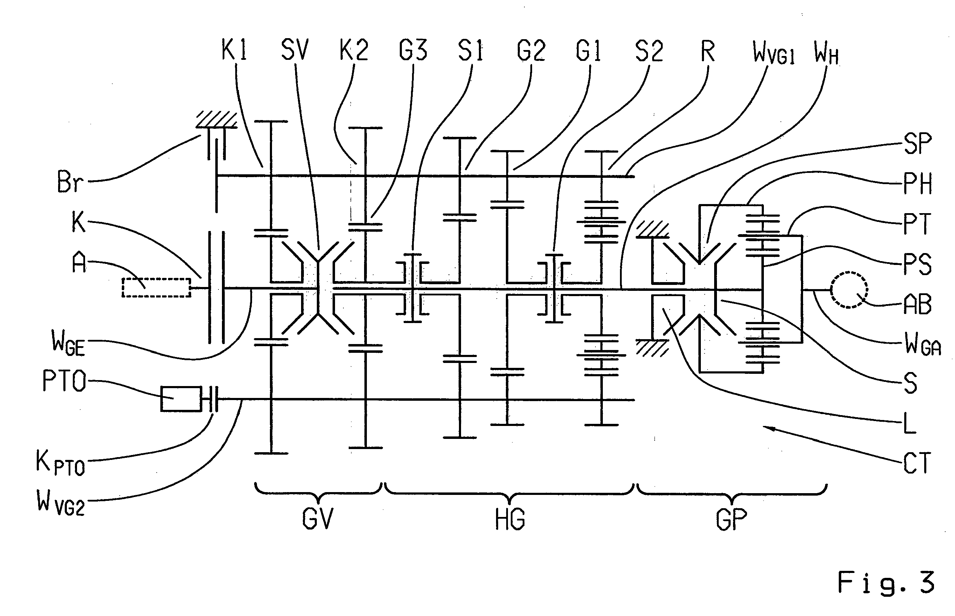

Fig. 3 zeigt den Antriebsstrang der Fig. 2 in größerem Detail, wobei es sich bei dem in Fig. 3 konkret gezeigten Gruppengetriebe CT um ein von der Anmelderin stammendes Gruppengetriebe der sogenannten AS-Tronic-Familie handelt.

Das Hauptgetriebe HG des Gruppengetriebes CT der Fig. 3 ist als Direktganggetriebe in Vorgelegebauweise ausgeführt und weist eine Hauptwelle W_{H} und zwei Vorgelegewellen W_{VG1} und W_{VG2} auf, wobei die erste Vorgelegewelle W_{VG1} mit der steuerbaren Getriebebremse Br versehen ist und wobei der getriebeseitige, instationäre Nebenabtrieb PTO an die zweite Vorgelegewelle W_{VG1} ankoppelbar bzw. von derselben abkoppelbar ist.

Das Hauptgetriebe HG der Fig. 3 ist mit drei Übersetzungsstufen G1, G2 und G3 für eine Vorwärtsfahrt und einer Übersetzungsstufe R für eine Rückwärtsfahrt dreistufig ausgebildet. Losräder der Übersetzungsstufen G1, G2 und R sind jeweils drehbar auf der Hauptwelle W_{H} gelagert und über zugeordnete Klauenkupplungen schaltbar. Die zugeordneten Festräder sind drehfest auf den Vorgelegewellen W_{VG1} und W_{VG2} angeordnet. Die als Direktgang ausgebildete höchste Übersetzungsstufe G3 des Hauptgetriebes HG ist über eine Direktschaltkupplung schaltbar. Die Schaltkupplungen der Übersetzungsstufen G3 und G2 sowie die Schaltkupplungen der Übersetzungsstufen G1 und R sind jeweils als Klauenkupplungen ausgebildet und in einem gemeinsamen Schaltpaket S1 bzw. S2 zusammengefasst. Das Hauptgetriebe HG ist unsynchronisiert schaltbar.

Die Vorschaltgruppe bzw. Splitgruppe GV des Gruppengetriebes CT der Fig. 3 ist zweistufig ausgebildet und ebenfalls in Vorgelegebauweise ausgeführt, wobei die beiden Übersetzungsstufen K1 und K2 der Vorschaltgruppe GV zwei schaltbare Eingangskonstanten des Hauptgetriebes HG bilden. Durch eine geringere Übersetzungsdifferenz der beiden Übersetzungsstufen K1, K2 ist die Vorschaltgruppe GV als Splitgruppe ausgelegt. Das Losrad der ersten Übersetzungsstufe K1 ist drehbar auf der Eingangswelle W_{GE} gelagert, die über eine steuerbare Trennkupplung K mit einem gestrichelt gezeichneten, als Verbrennungsmotor ausgebildeten und nicht zum Gruppengetriebe gehörenden Antriebsaggregat A in Verbindung steht. Das Losrad der zweiten Übersetzungsstufe K2 ist drehbar auf der Hauptwelle W_{H} gelagert. Die Festräder beider Übersetzungsstufen K1, K2 der Vorschaltgruppe GV sind jeweils drehfest mit den eingangsseitig verlängerten Vorgelegewellen W_{VG1} und W_{VG2} des Hauptgetriebes angeordnet. Die synchronisierten und als Klauenkupplungen ausgebildeten Schaltkupplungen der Vorschaltgruppe GV sind in einem gemeinsamen Schaltpaket SV zusammengefasst.

Die dem Hauptgetriebe HG nachgeordnete Bereichsgruppe GP des Gruppengetriebes CT der Fig. 3 ist ebenfalls zweistufig ausgebildet, jedoch in Planetenbauweise mit einem einfachen Planetenradsatz. Das Sonnenrad PS ist drehfest mit der ausgangsseitig verlängerten Hauptwelle W_{H} des Hauptgetriebes HG verbunden. Der Planetenträger PT ist drehfest mit der AusgangsWelle W_{GA} des Gruppengetriebes CT gekoppelt, die mit einem gestrichelt gezeichneten Achsantrieb AB in Verbindung steht. Das Hohlrad PH steht mit einem Schaltpaket SP mit zwei synchronisierten, als Klauenkupplungen ausgebildeten Schaltkupplungen in Verbindung, durch welche die Bereichsgruppe GP wechselweise durch die Verbindung des Hohlrads PH mit einem feststehenden Gehäuseteil in eine Langsamfahrstufe L und durch die Verbindung des Hohlrads PH mit der Hauptwelle W_{H} bzw. dem Sonnenrad PS in eine Schnellfahrstufe S schaltbar ist. Die Bereichsgruppe GP ist synchronisiert schaltbar.

Die hier vorliegende Erfindung betrifft nun solche Details, mithilfe derer bei einem Antriebsstrang mit einem automatisierten Schaltgetriebe und einem getriebeseitigen, instationären Nebenabtrieb PTO ein Einlegen und damit Aktivieren des Nebenabtriebs PTO auch während der Fahrt des Kraftfahrzeugs möglich ist.

Bereits an dieser Stelle soll darauf hingewiesen werden, dass das erfindungsgemäße Verfahren dabei nicht auf die Anwendungsfälle der in Fig. 1 bis 3 gezeigten Antriebsstränge beschränkt ist, sondern auch bei anderen Antriebsstrangkonfigurationen mit einem automatisierten Schaltgetriebe und einem getriebeseitigen, instationären Nebenabtrieb zum Einsatz kommen kann.

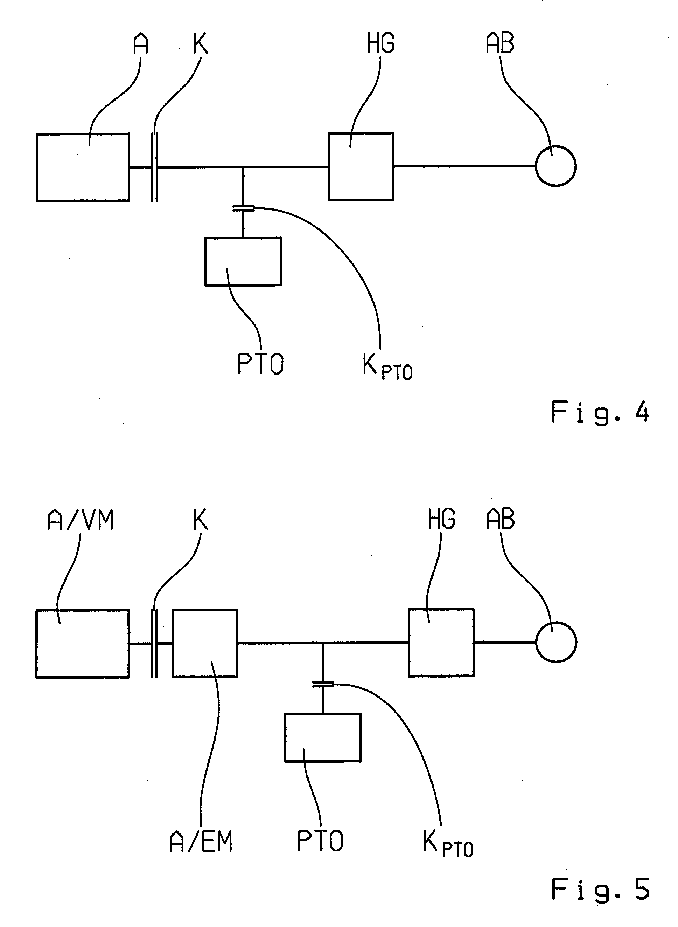

So kann die Erfindung auch beim Antriebsstrang der Fig. 4, bei welchem das automatisierte Schaltgetriebe ausschließlich ein Hauptgetriebe HG, jedoch weder eine Splitgruppe GV noch eine Bereichsgruppe GP umfasst, zum Einsatz kommen.

Ferner kann das erfindungsgemäße Verfahren auch beim Antriebsstrang der Fig. 5 zum Einsatz kommen, bei welchem das automatisierte Schaltgetriebe in Übereinstimmung zur Fig. 4 wiederum ausschließlich ein Hauptgetriebe HG umfasst, bei welchem das Antriebsaggregat A jedoch als Hybridantrieb ausgebildet ist, der zusätzlich zu einem Verbrennungsmotor VM eine elektrische Maschine EM umfasst, die gemäß Fig. 5 antriebstechnisch der Anfahrkupplung K nachgeschaltet ist.

Um nun bei einem Antriebsstrang mit einem automatisierten Schaltgetriebe und einem getriebeseitigen, instationären Nebenabtrieb PTO ein Aktvieren bzw. Einlegen des getriebeseitigen, instationären Nebenabtriebs PTO während der Fahrt des Kraftfahrzeugs zu ermöglichen, wird so vorgegangen, dass zunächst die getriebeseitige Anbindungsstelle für den getriebeseitigen, instationären Nebenabtrieb PTO vom Achsantrieb AB sowie zumindest teilweise vom Antriebsaggregat A abgekoppelt wird.

Zum Abkoppeln der getriebeseitigen Anbindungsstelle für den getriebeseitigen, instationären Nebenabtrieb PTO vom Achsantrieb AB wird ein der jeweiligen Anbindungsstelle für den Nebenabtrieb PTO nachgeschaltetes, zwischen der jeweiligen Anbindungsstelle und dem Achsantrieb AB positioniertes Getriebeteil in eine Neutralposition überführt. Dies erfolgt im Ausführungsbeispiel der Fig. 2 und 3 insbesondere durch Überführen des Hauptgetriebes HG in eine Neutralposition. Alternativ kann auch die Bereichsgruppe GP in eine Neutralposition überführt werden. In den Ausführungsbeispielen der Fig. 4 und 5, deren automatisiertes Schaltgetriebe ausschließlich über ein Hauptgetriebe HG verfügen, wird hierzu das Hauptgetriebe HG in eine Neutralposition überführt. Dann, wenn im Antriebsstrang der Fig. 1 der Nebenabtrieb PTO an die Anbindungsstelle AS_{PTO} zwischen der Anfahrkupplung K und der Splitgruppe GV angebunden ist, kann hierzu auch die Splitgruppe GV in eine Neutralposition überführt werden.

Zum zumindest teilweisen Abkoppeln der jeweiligen getriebeseitige Anbindungsstelle AS_{PTO} für den Nebenabtrieb PTO vom Antriebsaggregat A wird zumindest die Trennkupplung bzw. Anfahrkupplung K geöffnet, wobei hierbei in den Ausführungsbeispielen der Fig. 1 bis 4 die Anbindungsstelle für den Nebenabtrieb PTO vollständig vom Antriebsaggregat A getrennt wird und im Ausführungsbeispiel der Fig. 5 dieselbe ausschließlich vom Verbrennungsmotor VM des Antriebsaggregats A getrennt wird, hingegen an der elektrischen Maschine EM des Antriebsaggregats A angekoppelt bleibt.

Nachdem die getriebeseitige Anbindungsstelle für den Nebenabtrieb PTO vom Achsantrieb AB und zumindest teilweise vom Antriebsaggregat A abgekoppelt wurde, werden darauffolgend die Drehzahl der getriebeseitigen Anbindungsstelle für den Nebenabtrieb PTO sowie die Drehzahl des Nebenabtriebs PTO synchronisiert, wobei bei Erreichen der Synchrondrehzahl der Nebenabtrieb PTO an die jeweilige Anbindungsstelle angekoppelt wird.

Zur Durchführung dieser Synchronisation, also zum Erreichen der Synchrondrehzahl zwischen der Drehzahl der Anbindungsstelle für den Nebenabtrieb PTO sowie der Drehzahl für den Nebenabtrieb PTO dient eine Einrichtung, die entweder an der getriebeseitigen Anbindungsstelle für den Nebenabtrieb oder am Nebenabtrieb angreift. So kann in den Ausführungsbeispielen der Fig. 1 bis 3 die Drehzahl der Anbindungsstelle für den Nebenabtrieb PTO durch die Getriebebremse Br beeinflusst werden. So kann über die Getriebebremse Br, die an der ersten Vorgelegewelle W_{VG1} angreift, die Drehzahl der zweiten Vorgelegewelle W_{VG2} zum Erreichung der Synchrondrehzahl reduziert werden. Alternativ kann auch die Drehzahl der Vorgelegewelle W_{VG2} und damit die Drehzahl der Anbindungsstelle für den Nebenabtrieb PTO über die Anfahrkupplung K und das Antriebsaggregat A beeinflusst werden, wobei hierbei jedoch als Beeinflussungsgrenzen insbesondere eine Leerlaufdrehzahl sowie Abregeldrehzahl für das Antriebsaggregat A zu beachten sind.

Beim Antriebsstrang der Fig. 5 kann die Synchrondrehzahl zwischen der Anbindungsstelle für den Nebenabtrieb PTO und der Drehzahl des Nebenabtriebs PTO durch die elektrische Maschine EM des Antriebsaggregats A eingestellt werden.

Beim Antriebsstrang der Fig. 4 kann die Synchrondrehzahl zwischen der Drehzahl der Anbindungsstelle für den Nebenabtrieb sowie der Drehzahl des Nebenabtriebs PTO insbesondere durch die Neutralstellung des Hauptgetriebes HG sowie durch das Öffnen der Anfahrkupplung K erreicht werden, also dadurch, dass die Anbindungsstelle für den Nebenabtrieb PTO über Schleppmomente abgebremst wird. In diesem Fall kann die Synchronisierung eines Gangs mit entsprechender Übersetzung zu verwenden, um die Drehzahl der Anbindungsstelle für den Nebenabtrieb PTO gezielt zu beeinflussen.

Bei Erreichen der Synchrondrehzahl zwischen der Drehzahl der Anbindungsstelle für den Nebenabtrieb sowie der Drehzahl des Nebenabtriebs wird der Nebenabtrieb PTO an die jeweilige Anbindungsstelle des Getriebes angekoppelt, wobei anschließend die getriebeseitige Anbindungsstelle des Nebenabtriebs PTO und damit der Nebenabtrieb PTO sowohl an das Antriebsaggregat A als auch an den Achsantrieb AB angekoppelt wird.

Hierbei kann die getriebeseitige Anbindungsstelle für den Nebenabtrieb PTO und damit der Nebenabtrieb PTO zuerst an das Antriebsaggregat A und erst anschließend an den Achsantrieb AB angekoppelt werden.

Andererseits ist es auch möglich, hierbei die getriebeseitige Anbindungsstelle für den Nebenabtrieb PTO und damit den Nebenabtrieb PTO zunächst an den Achsantrieb AB und erst anschließend an das Antriebsaggregat A anzukoppeln.

Zum Ankoppeln der getriebeseitigen Anbindungsstelle für den Nebenabtrieb PTO an den Achsantrieb AB wird im automatisierten Schaltgetriebe ein zur aktuellen Fahrgeschwindigkeit passender Gang eingelegt, wobei es sich bei diesem Gang entweder um den zuletzt eingelegten Gang handelt, der vor dem Ankoppelvorgang des Nebenabtriebs PTO im automatisierten Schaltgetriebe eingelegt war, oder um einen entsprechend angepassten Gang. Hierzu kann es im Ausführungsbeispiel der Fig. 2 und 3 gegebenenfalls erforderlich sein, die Vorgelegewelle W_{VG2} auf eine der Fahrzeuggeschwindigkeit angepasste und damit dem einzulegenden Gang angepasste Drehzahl zu bringen.

Zum Ankoppeln der getriebeseitigen Anbindungsstelle für den Nebenabtrieb PTO und damit zum Ankoppeln desselben an das Antriebsaggregat A bzw. Verbrennungsmotor VM des Antriebsaggregats A wird die Trennkupplung bzw. Anfahrkupplung K geschlossen.

Mit der hier vorliegenden Erfindung wird ein Verfahren vorgeschlagen, mithilfe dessen bei einem Antriebsstrang, der über ein automatisiertes Schaltgetriebe sowie einen getriebeseitigen, instationären Nebenabtrieb verfügt, der Nebenabtrieb PTO während der Fahrt des Kraftfahrzeugs eingelegt und damit aktiviert werden kann. Hierzu wird die entsprechende Anbindungsstelle für den Nebenabtrieb zunächst vom Achsantrieb AB und zumindest teilweise vom Antriebsaggregat A gekoppelt, damit nachfolgend eine Synchronisation zwischen der Drehzahl der Anbindungsstelle des Nebenabtriebs PTO und der Drehzahl des Nebenabtriebs PTO erfolgen kann.

Da der Nebenabtrieb typischerweise vor dem Einlegen bzw. Aktivieren desselben stillsteht, handelt es sich bei der Synchrondrehazhl zwischen der Drehzahl der Anbindungsstelle für den Nebenabtrieb sowie der Drehzahl des Nebenabtriebs PTO typischerweise um einen Stillstand derselben, als um die Drehzahl Null.

Es ist jedoch auch möglich, falls die Drehzahl des Nebenabtriebs PTO und der Anbindungsstelle gemessen oder errechnet werden kann, eine vom Stillstand bzw. von Null abweichende Synchrondrehzahl zwischen der Anbindungsstelle für den Nebenabtrieb PTO und der Drehzahl des Nebenabtriebs PTO zu verwenden.

Die Einstellung der Synchrondrehzahl erfolgt, wie bereits erwähnt, durch eine entsprechende Einrichtung, wobei es sich bei dieser Einrichtung zum Beispiel um die Getriebebremse Br handelt kann. Ebenso kann die Synchronisation über eine elektrische Maschine EM, über das Zusammenspiel von Antriebsaggregat A und Anfahrkupplung K sowie über eine getriebeinterne Synchronisierung erfolgen.

Bei Erreichen der Synchronbedingung wird der Nebenabtrieb PTO an seine jeweilige Anbindungsstelle angekoppelt und darauffolgend der Antriebsstrang geschlossen, in dem sowohl eine Verbindung zum Achsantrieb AB als auch zum Antriebsaggregat A hergestellt wird.

Um also einen getriebeseitigen, instationären Nebenabtriebe PTO bei Fahrt des Kraftfahrzeugs einzulegen, ist das automatisierte Schaltgetriebe, welches vorzugsweise als Gruppengetriebe ausgeführt ist, zumindest in einem der Anbindungsstelle des Nebenabtriebs PTO antriebstechnisch nachgelagerten Getriebeteil nach Neutral zu schalten, sodass die Drehzahl der Anbindungsstelle für den Nebenabtrieb beeinflusst werden kann, ohne eine ungewollte Beschleunigung bzw. Verzögerung des Kraftfahrzeugs hervorzurufen.

Sobald dies geschehen ist, wird für die nötige Synchronbedingung bzw die Synchrondrehzahl gesorgt, nachfolgend der Nebenabtrieb an seine jeweilige Anbindungsstelle angekoppelt und darauffolgend der Antriebsstrang wieder geschlossen.

Weiterhin kann vorgesehen sein, das obige Einlegen und damit Aktivieren des Nebenabtriebs nur dann zuzulassen, wenn im Antriebsstrang wirkende Momente kleiner als ein applizierbarer Grenzwert sind.

Um ein für den Fahrer des Kraftfahrzeugs nachvollziehbares Verhalten zu gewährleisten, wird in diesem Zusammenhang vorzugsweise vorgesehen, dem Fahrer zu signalisieren, ob ein Nebenabtrieb während der Fahrt prinzipiell eingelegt werden kann oder nicht. Wie bereits ausgeführt, wird das Einlegen des Nebenabtriebs PTO insbesondere dann nicht zugelassen, wenn eine Fahrbahnneigung und/oder Antriebsstrangmomente größer als ein applizierbarer Grenzwert ist und/oder sind.

### Bezugszeichen

- Br: Getriebebremse
- CT: Gruppengetriebe
- G1: Übersetzungsstufe Vorwärtsfahrt
- G2: Übersetzungsstufe Vorwärtsfahrt
- G3: Übersetzungsstufe Vorwärtsfahrt
- GV: Splitgruppe
- GP: Bereichsgruppe
- HG: Hauptgetriebe
- K: Trennkupplung
- K1: Übersetzungsstufe
- K2: Übersetzungsstufe
- L: Langsamfahrstufe
- PS: Sonnenrad
- PT: Planetenträger
- PTO: Nebenabtrieb
- K_{PTO}: Kupplung Nebenabtrieb
- AS_{PTO}: Anbindungsstelle Nebenabtrieb
- PH: Hohlrad
- R: Übersetzungsstufe Rückwärtsfahrt
- S: Schnellfahrstufe
- S1: Schaltpaket
- S2: Schaltpaket
- SP: Schaltpaket
- SV: Schaltpaket
- W_{GA}: Ausgangswelle
- W_{GE}: Eingangswelle
- W_{H}: Hauptwelle
- W_{VG1}: Vorgelegewelle
- W_{VG2}: Vorgelegewelle

- A: Antriebsaggregat
- AB: Achsantrieb
- VM: Verbrennungsmotor
- EM: elektrische Maschine

## Patentansprüche

1. Verfahren zum Betreiben eines Antriebsstrangs eines Kraftfahrzeugs, wobei der Antriebsstrang ein zwischen einem Antriebsaggregat sowie einem Achsantrieb angeordnetes automatisiertes Schaltgetriebe aufweist, wobei eine Eingangswelle des automatisierten Schaltgetriebes über eine steuerbare Trennkupplung mit dem Antriebsaggregat und eine Ausgangswelle des automatisierten Schaltgetriebes mit dem Achsantrieb in Verbindung steht, und wobei der Antriebsstrang weiterhin einen getriebeseitigen, instationären Nebenabtrieb umfasst, der zum Aktivieren bzw. Einlegen an eine getriebeseitige Anbindungsstelle ankoppelbar und zum Deaktivieren bzw. Auslegen von derselben abkoppelbar ist, wobei zum Aktivieren bzw. Einlegen des getriebeseitigen, instationären Nebenabtriebs während einer Fahrt des Kraftfahrzeugs mit folgenden Schritten vorgegangen wird:
a) zunächst wird die getriebeseitige Anbindungsstelle für den Nebenabtrieb vom Achsantrieb sowie zumindest teilweise vom Antriebsaggregat abgekoppelt;
b) darauffolgend werden die Drehzahl der getriebeseitigen Anbindungsstelle für den Nebenabtrieb sowie die Drehzahl des Nebenabtriebs synchronisiert, wobei bei Erreichen einer Synchrondrehzahl zwischen der Drehzahl der Anbindungsstelle für den Nebenabtrieb sowie der Drehzahl des Nebenabtriebs der Nebenabtrieb an die Anbindungsstelle angekoppelt wird;
c) anschließend wird die getriebeseitige Anbindungsstelle für den Nebenabtrieb und damit der Nebenabtrieb sowohl an das Antriebsaggregat als auch an den Achsantrieb angekoppelt, **dadurch gekennzeichnet, dass** das Aktivieren bzw. Einlegen des getriebeseitigen, instationären Nebenabtriebs während der Fahrt des Kraftfahrzeugs nur dann zugelassen wird, wenn die Neigung einer Fahrbahn des Kraftfahrzeugs kleiner als ein applizierbarer Grenzwert ist.

2. Verfahren nach Anspruch 1, **dadurch gekennzeichnet, dass** in Schritt a) zumindest ein der getriebeseitigen Anbindungsstelle für den Nebenabtrieb nachgeschaltetes, zwischen der Anbindungsstelle und dem Achsantrieb positioniertes Getriebeteil in eine Neutralposition überführt und die der Anbindungsstelle für den Nebenabtrieb vorgeschaltete Trennkupplung geöffnet wird.

3. Verfahren nach Anspruch 2, **dadurch gekennzeichnet, dass** hierbei ein Hauptgetriebe des automatisierten Schaltgetriebes, welches der getriebeseitigen Anbindungsstelle für den Nebenabtrieb nachgeschaltet ist, in eine Neutralposition überführt wird.

4. Verfahren nach Anspruch 2, **dadurch gekennzeichnet, dass** hierbei eine Bereichsgruppe oder Splitgruppe des automatisierten Schaltgetriebes, welches der getriebeseitigen Anbindungsstelle für den Nebenabtrieb nachgeschaltet und einem Hauptgetriebe vor- oder nachgeschaltet ist, in eine Neutralposition überführt wird.

5. Verfahren nach einem der Ansprüche 1 bis 4, **dadurch gekennzeichnet, dass** in Schritt b) die Synchrondrehzahl zwischen der Drehzahl der Anbindungsstelle für den Nebenabtrieb sowie der Drehzahl des Nebenabtriebs über eine Einrichtung eingestellt wird, die entweder an der getriebeseitigen Anbindungsstelle für den Nebenabtrieb oder am Nebenabtrieb angreift.

6. Verfahren nach Anspruch 5, **dadurch gekennzeichnet, dass** hierbei die Drehzahl der getriebeseitigen Anbindungsstelle für den Nebenabtrieb über eine Getriebebremse oder eine elektrische Maschine beeinflusst wird.

7. Verfahren nach Anspruch 5, **dadurch gekennzeichnet, dass** hierbei die Drehzahl des Nebenabtriebs über die Anfahrkupplung und/oder das Antriebsaggregat beeinflusst wird.

8. Verfahren nach einem der Ansprüche 1 bis 7, **dadurch gekennzeichnet, dass** in Schritt c) die getriebeseitige Anbindungsstelle für den Nebenabtrieb zuerst an das Antriebsaggregat angekoppelt wird, und dass erst anschließend dieselbe an den Achsantrieb angekoppelt wird.

9. Verfahren nach einem der Ansprüche 1 bis 7, **dadurch gekennzeichnet, dass** in Schritt c) die getriebeseitige Anbindungsstelle für den Nebenabtrieb zuerst an den Achsantrieb angekoppelt wird, und dass erst anschließend dieselbe an das Antriebsaggregat angekoppelt wird.

10. Verfahren nach Anspruch 8 oder 9, **dadurch gekennzeichnet, dass** zum Ankoppeln der getriebeseitigen Anbindungsstelle für den Nebenabtrieb an den Achsantrieb im automatisierten Schaltgetriebe ein zur aktuellen Fahrgeschwindigkeit passender Gang eingelegt wird.

11. Verfahren nach Anspruch 10, **dadurch gekennzeichnet, dass** zum Ankoppeln der getriebeseitigen Anbindungsstelle für den Nebenabtrieb an das Antriebsaggregat die Trennkupplung geschlossen wird.

12. Verfahren nach einem der Ansprüche 1 bis 11, **dadurch gekennzeichnet, dass** das Aktivieren bzw. Einlegen des getriebeseitigen, instationären Nebenabtriebs während der Fahrt des Kraftfahrzeugs nur dann zugelassen wird, wenn Antriebsstrangmomente kleiner als ein applizierbarer Grenzwert sind.

## Claims

1. Method for operating a drivetrain of a motor vehicle, wherein the drivetrain has an automated shift transmission arranged between a drive assembly and a final drive, wherein an input shaft of the automated shift transmission is connected via a controllable separating clutch to the drive assembly and an output shaft of the automated shift transmission is connected to the final drive, and wherein the drivetrain also has a transmission-side non-steady-state power takeoff which, for activation or engagement, can be coupled to a transmission-side connection point and, for deactivation or disengagement, can be decoupled from said connection point, wherein, for activation or engagement of the transmission-side, non-steady-state power takeoff while the motor vehicle is travelling, a process is followed which has the following steps:
a) firstly, the transmission-side connection point for the power takeoff is decoupled from the final drive and at least partially from the drive assembly;
b) subsequently, the rotational speed of the transmission-side connection point for the power takeoff and the rotational speed of the power takeoff are synchronized, wherein, when rotational speed synchronicity is achieved between the rotational speed of the connection point for the power takeoff and the rotational speed of the power takeoff, the power takeoff is coupled to the connection point;
c) subsequently, the transmission-side connection point for the power takeoff, and thus the power takeoff, are coupled both to the drive assembly and to the final drive, **characterized in that** the activation or engagement of the transmission-side, non-steady-state power takeoff while the motor vehicle is travelling is permitted only if the gradient of a roadway on which the vehicle is travelling is lower than an applicable threshold value.

2. Method according to Claim 1, **characterized in that**, in step a), at least one transmission part which is downstream of the transmission-side connection point for the power takeoff and which is positioned between the connection point and the final drive is moved into a neutral position, and the separating clutch upstream of the connection point for the power takeoff is opened.

3. Method according to Claim 2, **characterized in that**, here, a main transmission of the automated shift transmission which is downstream of the transmission-side connection point for the power takeoff is moved into a neutral position.

4. Method according to Claim 2, **characterized in that**, here, a range group or split group of the automated shift transmission which is downstream of the transmission-side connection point for the power takeoff and which is upstream or downstream of a main transmission is moved into a neutral position.

5. Method according to one of Claims 1 to 4, **characterized in that**, in step b), the rotational speed synchronicity between the rotational speed of the connection point for the power takeoff and the rotational speed of the power takeoff is established by means of a device which engages either on the transmission-side connection point for the power takeoff or on the power takeoff.

6. Method according to Claim 5, **characterized in that**, here, the rotational speed of the transmission-side connection point for the power takeoff is influenced by means of a transmission brake or an electric machine.

7. Method according to Claim 5, **characterized in that**, here, the rotational speed of the power takeoff is influenced by means of the starting clutch and/or the drive assembly.

8. Method according to one of Claims 1 to 7, **characterized in that**, in step c), the transmission-side connection point for the power takeoff is coupled firstly to the drive assembly, and **in that** said connection point is only thereafter coupled to the final drive.

9. Method according to one of Claims 1 to 7, **characterized in that**, in step c), the transmission-side connection point for the power takeoff is coupled firstly to the final drive, and **in that** said connection point is only thereafter coupled to the drive assembly.

10. Method according to Claim 8 or 9, **characterized in that**, for the coupling of the transmission-side connection point for the power takeoff to the final drive, a gear suited to the present travelling speed is engaged in the automated shift transmission.

11. Method according to Claim 10, **characterized in that**, for the coupling of the transmission-side connection point for the power takeoff to the drive assembly, the separating clutch is closed.

12. Method according to one of Claims 1 to 11, **characterized in that** the activation or engagement of the transmission-side, non-steady-state power takeoff while the motor vehicle is travelling is permitted only if drivetrain torques are lower than an applicable threshold value.

## Revendications

1. Procédé de conduite du train d'entraînement d'un véhicule automobile,
le train d'entraînement présentant une transmission automatique disposée entre une machine d'entraînement et l'entraînement d'un essieu,
un arbre d'entrée de la transmission automatique étant raccordé par l'intermédiaire d'un embrayage asservi à la machine d'entraînement et à l'arbre de sortie de la transmission automatique,
le train d'entraînement comprenant en outre sur la transmission une sortie secondaire non stationnaire qui peut être accouplée en un emplacement d'accouplement de la transmission en vue de l'activation ou de l'engagement et qui peut en être découplée en vue de sa désactivation ou de son dégagement,
l'activation ou l'engagement de la sortie secondaire non stationnaire de la transmission pendant le déplacement du véhicule automobile étant réalisé par les étapes suivantes :
a) tout d'abord, l'emplacement de raccordement de la sortie secondaire de la transmission est désaccouplé de l'entraînement d'essieu ainsi qu'au moins en partie du moteur d'entraînement,
b) ensuite, la vitesse de rotation de l'emplacement de raccordement de la sortie secondaire à la transmission et la vitesse de rotation de la sortie secondaire sont synchronisées, l'accouplement de la sortie secondaire à l'emplacement de raccordement ayant lieu lorsque la vitesse de rotation de l'emplacement de raccordement de la sortie secondaire et la vitesse de rotation de la sortie secondaire ont été synchronisées,
c) ensuite, l'emplacement de raccordement de la sortie secondaire à la transmission et donc la sortie secondaire sont accouplés à la fois au moteur d'entraînement et à l'entraînement d'essieu, **caractérisé en ce que**
l'activation ou l'engagement de la sortie secondaire non stationnaire de la transmission ne sont permis pendant que le véhicule automobile est en déplacement que si la pente de la chaussée sur laquelle circule le véhicule automobile est inférieure à une valeur limite applicable.

2. Procédé selon la revendication 1, **caractérisé en ce qu'**au cours de l'étape a), au moins une partie de la transmission raccordée en aval de l'emplacement de raccordement de la sortie secondaire à la transmission et disposée entre l'emplacement de raccordement et l'entraînement d'essieu est amenée dans une position neutre et l'embrayage prévu en amont de l'emplacement de raccordement de la sortie secondaire est ouvert.

3. Procédé selon la revendication 2, **caractérisé en ce que** la transmission principale de la boîte de transmission automatique raccordée en aval de l'emplacement de raccordement de la sortie secondaire à la transmission est transférée en position neutre.

4. Procédé selon la revendication 2, **caractérisé en ce qu'**un groupe de zone ou groupe de division de la boîte de vitesse automatique raccordé en aval de l'emplacement de raccordement de la sortie secondaire à la transmission et raccordé en amont ou en aval de la transmission principale est amené en position neutre.

5. Procédé selon l'une des revendications 1 à 4, **caractérisé en ce qu'**à l'étape b), la synchronicité de la vitesse de rotation de l'emplacement de raccordement de la sortie secondaire et de la vitesse de rotation de la sortie secondaire est ajustée à l'aide d'un dispositif qui engage soit l'emplacement de raccordement de la sortie secondaire à la transmission soit la sortie secondaire.

6. Procédé selon la revendication 5, **caractérisé en ce que** la vitesse de rotation de l'emplacement de raccordement de la sortie secondaire à la transmission est modifiée par un frein de transmission ou par une machine électrique.

7. Procédé selon la revendication 5, **caractérisé en ce que** la vitesse de rotation de la sortie secondaire est modifiée par l'intermédiaire de l'embrayage de démarrage et/ou du moteur d'entraînement.

8. Procédé selon l'une des revendications 1 à 7, **caractérisé en ce qu'**à l'étape c), l'emplacement de raccordement de la sortie secondaire à la transmission est d'abord accouplé au moteur d'entraînement avant d'être accouplé ensuite à l'entraînement d'essieu.

9. Procédé selon l'une des revendications 1 à 7, **caractérisé en ce qu'**à l'étape c), l'emplacement de raccordement de la sortie secondaire à la transmission est accouplé d'abord à l'entraînement d'essieu avant d'être ensuite accouplé au moteur d'entraînement.

10. Procédé selon les revendications 8 ou 9, **caractérisé en ce qu'**un rapport de transmission adapté à la vitesse en cours de roulage est engagé pour accoupler l'emplacement de raccordement de la sortie secondaire à la transmission à l'entraînement d'essieu dans la boîte de vitesse automatique.

11. Procédé selon la revendication 10, **caractérisé en ce que** l'embrayage est fermé pour accoupler l'emplacement de raccordement de la sortie secondaire à la transmission au moteur d'entraînement.

12. Procédé selon l'une des revendications 1 à 11, **caractérisé en ce que** l'activation ou l'engagement de la sortie secondaire instationnaire de la transmission ne sont permis pendant que le véhicule automobile est en déplacement que si les couples appliqués sur le train d'entraînement sont inférieurs à des valeurs limites applicables.
